**Europäisches Patentamt**

**European Patent Office**

**Office européen des brevets**

(19)

(11) Veröffentlichungsnummer: **0 098 570**
**B1**

(12) # EUROPÄISCHE PATENTSCHRIFT

(45) Veröffentlichungstag der Patentschrift:
**10.06.87**

(51) Int. Cl.⁴: **G 01 M 15/00,** G 01 L 3/22

(21) Anmeldenummer: **83106514.9**

(22) Anmeldetag: **04.07.83**

(54) **Vorrichtung zum Prüfen eines Drehmomenterzeugers.**

(30) Priorität: **05.07.82 DE 3225035**

(43) Veröffentlichungstag der Anmeldung:
**18.01.84 Patentblatt 84/3**

(45) Bekanntmachung des Hinweises auf die Patenterteilung:
**10.06.87 Patentblatt 87/24**

(84) Benannte Vertragsstaaten:
**DE FR IT SE**

(56) Entgegenhaltungen:
**FR-A-2 363 093**
**GB-A-2 065 887**
**US-A-3 667 290**
**US-A-3 898 875**

**Elektro-Anzeiger, 34. Jhrg. (1981), Nr. 6, S. 49-53**

(73) Patentinhaber: **Siemens Aktiengesellschaft Berlin
und München, Wittelsbacherplatz 2, D-8000
München 2 (DE)**

(72) Erfinder: **Blaschke, Felix, Dr., Steinforststrasse 19,
D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Prüfen eines Drehmomenterzeugers dessen Welle im Normalbetrieb an eine trägheitsmomentenbehaftete Last gekoppelt ist mit den Merkmalen der Oberbegriffe der unabhängigen Ansprüche.

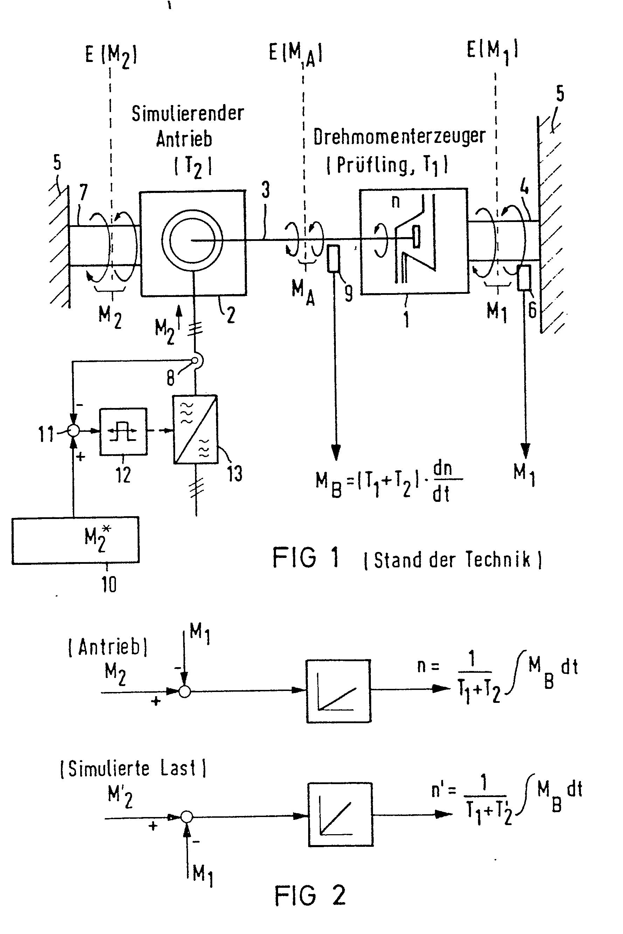

In Fig. 1 ist ein Prüfstand für einen derartigen Drehmomenterzeuger dargestellt wobei als Drehmomenterzeuger oder "Prüfling" z. B. eine Brennkraftmaschine 1 dienen kann. Bei der chemischen Verbrennung entstehen zwischen dem Brennraum-Boden und dem Kolben-Boden mechanische Kräfte die zu einer Beschleunigung der mit der Welle 3 verbundenen Schwungmassen (Trägheitsmoment $T_1$) der Brennkraftmaschine führen für deren Drehzahl n die positive Richtung durch den Doppelpfeil in Fig 1 dargestellt sei. Mit $M_1$ ist das auf die Schwungmassen $T_1$ wirkende Drehmoment bezeichnet das bei geeigneter Wahl des Vorzeichens zu einer Beschleunigung der Schwungmassen führt. Über die mit dem Kolben-Boden starr verbundenen Teile z. B. die Halterung 4 des Prüflings wird dieses Drehmoment $M_1$ auf das Fundament 5 der gesamten Anordnung übertragen und dort durch ein gleich großes entgegengesetzt gerichtetes Reaktionsmoment aufgefangen. In einer gestrichelt gezeichneten mathematischen Schnittebene $E(M_1)$ durch die Ständerhalterung hebt sich dann des rechts dieser Ebene durch einen Pfeil dargestellte Reaktionsmoment des Fundamentes mit dem links davon gezeigten vom Prüfling erzeugten Drehmoment $M_1$ auf. An dieser Stelle herrscht also in der Halterung ein durch die beiden Pfeile dargestelltes Torsionsmoment das z. B. von einer Kraftmeßdose Dehnungsstreifen oder einem anderen Drehmomentaufnehmer 6 als Maß für das "innere Drehmoment $M_1$" des Prüflings erfaßt werden kann. In dem Fall daß das aus der Maschine herausführende Ende der Welle 3 frei ist würde dieses Drehmoment $M_1$ zu einer Drehzahl $n_1$ führen, für die gilt $M_1 = -T_1 . \dot{n}_1$, wenn für die dargestellte Torsionsrichtung $M_1 < 0$ gewählt ist. Die normalerweise von dem Drehmomenterzeuger angetriebene Last z. B. ein Fahrzeug wird auf dem entsprechenden Prüfstand durch einen elektrischen Antrieb 2 simuliert, z. B. eine Drehfeldmaschine deren elektrische Einspeisung durch Vorgabe elektrischer Sollwerte so geregelt ist daß auf ihren Läufer ein Drehmoment $M_2$ wirkt. Auch hier ist des Vorzeichen von $M_2$ so gewählt daß in dem Fall daß das aus dem Antrieb herausführende Ende der Läuferwelle frei ist eine Drehzahl $n_2$ mit $M_2 = T_2 . \dot{n}_2$ entsteht wobei der Drehzahl $n_2$ die gleiche positive Richtung wie der Drehzahl $n_1$ zugeordnet ist.

Das vom elektrischen Antrieb 2 aufgebrachte elektrische Drehmoment ("inneres Drehmoment $M_2$") wird analog zu den Vorgängen im Brennraum der Brennkraftmaschine 1 durch elektrische Kräfte im Luftspalt zwischen Läufer und Ständer übertragen. Dieses Moment wird sowohl auf die mit der Läuferachse verbundenen Schwungmassen (Trägheitsmoment $T_2$) und über die entsprechende Ständerhalterung 7 auch auf das Fundament 5 übertragen. Daher kann $M_2$ als Reaktionsmoment des Fundaments bzw. als Torsionsmoment an einer mathematischen Schnittstelle $E(M_2)$ erfaßt werden, es ist jedoch auch aus den Istwerten der elektrischen Ständereinspeisung durch elektrische Meßglieder 8 erfaßbar.

Wäre die Welle des Prüflings mit der Welle des Antriebs in einer Ebene (EMA) über einen Torsionsmomentengeber verbunden so mäße dieser Geber ein zwischen den Trägheitsmomenten ("Schwungmassen") $T_1$ und $T_2$ ein ausgetauschtes Drehmoment $M_A$ ("äußeres Drehmoment $M_A$"). Dieses Drehmoment ist unterschieden von dem Beschleunigungsmoment $M_B$, das beiden Schwungmassen gemeinsam durch die Beziehung $M_B = (T_1 + T_2) . \dot{n}$ zugeordnet ist, wenn mit $n = n_1 = n_2$ die Drehzahl der beiden Wellen bei deren kraftschlüssiger Verbindung bezeichnet ist. Das Beschleunigungsmoment $M_B$ ist demnach durch einen die Ableitung der Winkelgeschwindigkeit n messenden Beschleunigungsgeber 9 meßbar.

Wird das vom Prüfling aufgebrachte Moment $M_1$ durch einen generatorischen Betrieb des Antriebes gerade vollständig abgeführt ($M_1 = -M_2$) so bleibt die Drehzahl n konstant und das den beiden Schwungmassen gemeinsam zugeordnete Beschleunigungsmoment $M_B$ verschwindet. Dies führt zu der im oberen Diagramm von Fig. 2 dargestellten regelungstechnischen Struktur des gesamten Antriebs, bei der die Beschleunigung der Schwungmassen $T_1 + T_2$ (d.h. das Beschleunigungsmoment $M_B$) durch einen einzigen Integrator mit der Zeitkonstante $(T_1 + T_2)$ dargestellt ist. Die Schwungmassen $T_1$, $T_2$, $T_2'$ sind dabei proportional den Integrationskonstanten der entsprechenden Integratoren in der Darstellung von Fig. 2 weshalb die entsprechenden Zeitkonstanten mit den Symbolen der Schwungmassen, d.h. den Trägheitsmomenten bezeichnet sind.

Das untere Diagramm entspricht der regelungstechnischen Struktur im zu simulierenden Normalbetrieb d. h. wenn der Prüfling mit seiner Schwungmasse $T_1$ an eine mit der Schwungmasse (Trägheitsmoment $T_2'$) behaftete Last angeschlossen ist. Dabei kann vorgesehen sein daß die Last auch selbst ein eigenes inneres Drehmoment $M_2'$ erzeugt z. B. um eine Talfahrt des Fahrzeuges zu simulieren. Während der Prüfung soll auf die Schwungmasse $T_1$ des Prüflings der unverändert dasselbe innere Drehmoment $M_1$ aufbringt, eine derartige Beschleunigung $M_B$ wirken, daß sich eine Drehzahl n einstellt, die gleich der Drehzahl n' bei Normalbetrieb ist.

Im Motorprüfstand wird also das vom Motor normalerweise angetriebene Fahrzeug als eine mit einem Trägheitsmoment behaftete und gegebenenfalls auch ein Drehmoment erzeugende Last in Form eines elektrischen Antriebes simuliert. Da das Fahrzeug je nach eingelegtem Gang Belastung usw. ein variables Trägheitsmoment aufweist, muß für eine dynamisch richtige Simulation auch der elektrische Antrieb mit veränderlichem Trägheitsmoment ausgestattet werden. Das jeweils erforderliche Last-Drehmoment $M_2'$ des realen Fahrzeuges kann z. B. von einem mittels eines Fahrprogramms einen tatsächlichen Fahrbetrieb simulierenden Rechner 10 als Sollwert $M_2^*$ einer Drehmomentregelung des Antriebs aufgeprägt werden wie in Fig 1 durch die Regelvergleichsstelle 11 dargestellt ist, deren Ausgangssignal über einen Steuersatz 12 die elektrische Speisung 13 des Antriebs steuert, z. B. den Umrichter einer umrichtergespeisten Drehfeldmaschlne. Durch Zu- und Abschalten von Schwungmassen könnte dem Antrieb auch das nach dem Programm jeweils erforderliche Last-Trägheitsmoment $T_2'$ verliehen werden. Dies ware aber sehr aufwendig.

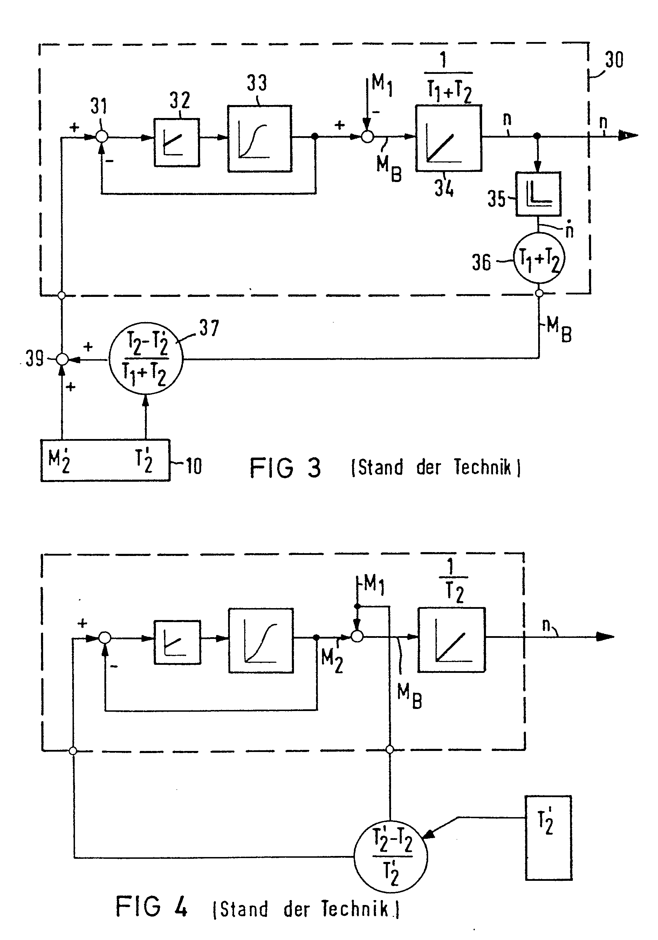

Nun ist es aber möglich den Unterschied zwischen dem vom Fahrprogramm vorgegebenen und dem vorhandenen Trägheitsmoment durch zusätzliche elektrische Antriebskraft zu kompensieren. Dies führt zu der in Fig. 3 dargestellten Anordnung.

Mit 30 ist dabei in regelungstechnischer Darstellung der in Fig. 1 gezeigte Motorprüfstand symbolisiert. Dem elektrischen Antrieb wird ein Sollwert $M_2^*$ vorgegeben, der das für die Simulierung des Fahrzeugs nötige, vom Antrieb elektrisch aufzubringende Drehmoment bestimmt. Ein unterlagerter Drehmoment-Regelkreis vergleicht diesen Sollwert für die elektrische Einspeisung des Ständers mit einem Istwert (Vergleichsstelle 31). Die Regeldifferenz ist einem Momentenregler 32 zugeführt, der dem Stellglied für das elektrische Moment des Antriebs vorgeschaltet ist. Ist z. B. eine feldorientiert betriebene umrichtergespeiste Drehfeldmaschlne als Antrieb verwendet, deren Fluß auf einen konstanten Sollwert gehalten wird und deren Drehmoment daher proportional der flußsenkrechten Komponente des Ständerstromes ist, so kann dem Regler als Sollwert direkt die flußsenkrechte Ständerstromkomponente vorgegeben und mit der aus dem Ist-Ständerstrom berechneten flußsenkrechten Ständerstromkomponente verglichen werden. Die benötigten Rechenglieder, Meßwandler etc. bilden zusammen mit dem Umrichter das Stellglied für den Ständerstrom und damit letztlich für das aufzubringende elektrische Drehmoment und sind durch ein Dynamikglied 33 symbolisiert.

Aus diesem elektrischen Drehmoment $M_2$ und dem vom Prüfling aufgebrachten inneren Drehmoment $M_1$ entsteht das den gemeinsamen Schwungmassen $T_1 + T_2$ zugeordnete Beschleunigungsmoment $M_B$, das auf die Drehzahl n wirkt wie durch das Integratorsymbol 34 dargestellt ist.

Der das Beschleunigungsmoment messende Beschleunigungsgeber ermittelt aus der zeitlichen Änderung $\dot{n}$ der Drehzahl n ein Signal das bis auf den Proportionalitätsfaktor $T_1 + T_2$ proportional zu $M_B$ ist. Daher ist der Beschleunigungsgeber als Differenzierer 35 und ein konstantes Multiplikationsglied 36 dargestellt. Damit steht das im Prüfbetrieb tatsächlich auftretende Beschleunigungsmoment $M_B$ zur Verfügung das einen durch den Sollwert $M_2^*$ gesteuerten Anteil enthält.

Die vom Antrieb aufgebrachte elektrische Leistung $M_2 \cdot \dot{n}$ und die dem Antrieb pro Zeiteinheit entzogene kinetische Energie $-T_2 \cdot n \cdot \dot{n}$ ist die vom Prüfling aufzunehmende Leistung, die für eine gute Simulation gleich der entsprechenden Leistung $M_2' \cdot n - T_2' \cdot n \cdot \dot{n}$ des Normalbetriebes sein muß. Mit $M_B = (T_1 + T_2) \cdot \dot{n}$ folgt daraus daß vom Antrieb das simulierende Moment $M_2 = M_2' + M_B \cdot (T_2 - T_2')/(T_1 + T_2)$ aufzubringen ist. Dies wird nach Fig. 3 durch ein Prüfprogramm (Rechner 38) mit dem Last-Trägheitsmoment $T_2'$ gespeistes Multiplizierglied 37 für $M_B$ bzw. $\dot{n}$ dargestellt, das nach Aufschaltung auf das Last-Drehmoment $M_2'$ (Additionsglied 39) den entsprechenden Sollwert $M_2^*$ für dag elektrische Antriebsmoment liefert.

Eine derartige Schaltung ist aus "Elektro-Anzeiger" 34. lg. (1981), Nr. 6, Seiten 49 bis 53, Bremsenprüfstand mit Schwungmassensimulation, H.J. von Thun, bekannt. Dort sind auch die Nachteile dieser Schaltung beachrieben: Das Drehzahlsignal des Prüfstandes muß differenziert werden um die Winkelbeschleunigung zu erhalten und der Simulationskreis erzeugt wegen der Verwendung der Winkelbeschleunigung eine Rückkopplung. Beide Vorgänge begrenzen die Simulationsdynamik so daß sich diese Vorrichung nur für langsame Beschleunigungen bzw. Verzögerungen eignet.

Für den Spezialfall daß als Drehmomenterzeuger eine Bremse zu prüfen ist, gibt diese Literaturstelle eine andere Schaltung an. Simuliert wirdein Bremsbetrieb bei dem weder der Fahrzeugmotor noch ein anderes Drehmoment (z. B. Hangabtrieb) auf die Bremse wirkt ($M_2' = 0$) die daher nur die kinetische Leistung $T_2' \cdot n \cdot \dot{n}$ der Schwungmassen aufzunehmen hat ($\dot{n} = M_1/(T_1 + T_2)$. Um die störende Rückkopplung aufzuheben ist der Drehmomentaufnehmer zwischen Bremse und Fundament angeordnet d.h. es wird $M_1$ gemessen. Vernachlässigt man die Schwungmasse der mit dem Getriebe bzw. dem Antrieb verbundenen Scheibe der Bremse ($T_1 = 0$) so nimmt der Prüfling im Prüfbetrieb die Leistung $M_2 \cdot n + T_2 \cdot n \cdot \dot{n}$ auf und für die Simulation muß gelten $M_2 = (T_2' - T_2)/T_2 \cdot M_1$. Diese Idealisierung führt zu der hier in Fig. 4 gezeigten Schaltung, die nur für eine Simulierung unter diesen speziellen Bedingungen ($M_2' = 0$, $T_1 = 0$) geeignet ist.

Der Erfindung liegt die Aufgabe zugrunde eine Vorrichtung anzugeben mit der auch unter weniger einschränkenden Bedingungen eine Simulation möglich ist. Die Vorrichtung soll z. B. die Simulation einer Bremse oder Getriebes auch bei Talfahrt und/oder eingeschaltetem Motor gestatten wobei durch den Antrieb die gemeinsame Wirkung von Fahrzeug und Motor bimuliert wird. Außerdem gestattet die Vorrichtung auch die Prüfung des Motors selbst wobei durch den Antrieb die Wirkung von Fahrzeug und Getriebe simuliert wird.

Diese Aufgabe wird gelöst durch eine Vorrichtung nach Anspruch 1 oder der Ansprüchen 2 bzw. 9. Vorteilhafte Weiterbildungen der Erfindung sind in den Unteransprüchen gekennzeichnet.

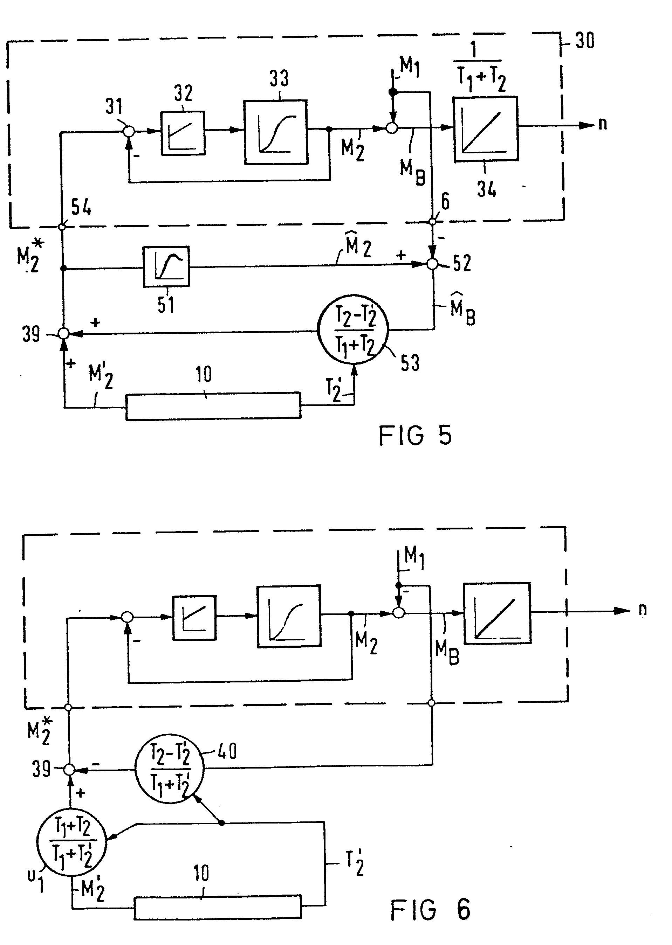

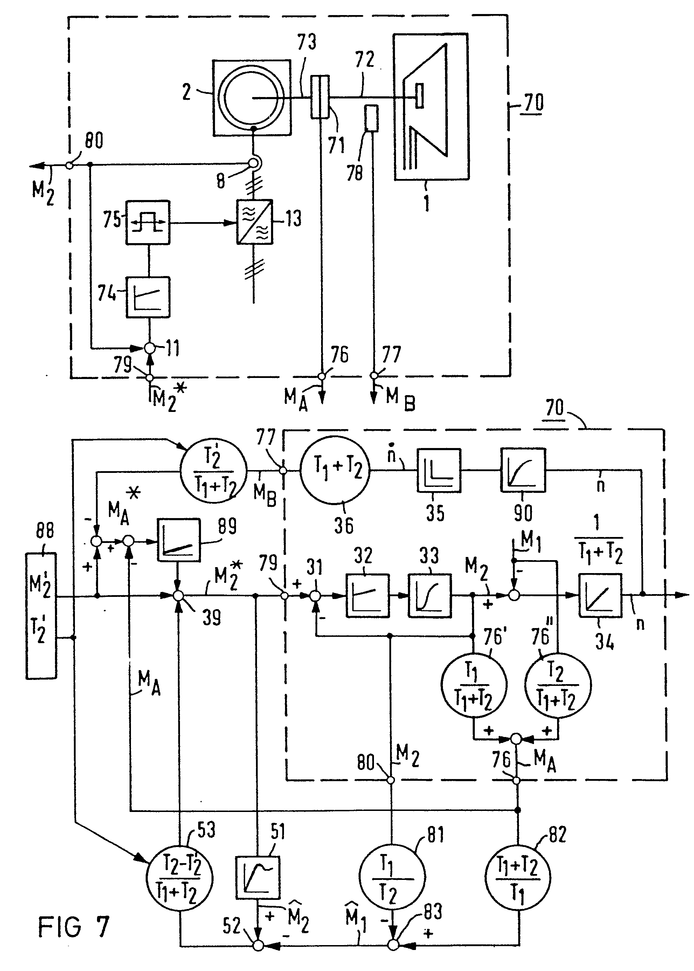

Anhand der weiteren Figuren 5, 6 und 7 sei die Erfindung näher erläutert wobei Fig. 5 ein bevorzugtes Ausführungsbeispiel darstellt bei dem durch den Drehmomentaufnehmer direkt das innere Drehmoment $M_1$ des Prüflings gemessen und gemäß einem vorteilhaften Ausführungsbeispiel die Dynamik des Stellgliedes für das vom elektrischen Antrieb aufzubringende elektrische Moment $M_2$ nachgebildet wird. Fig 6 zeigt ein Ausführungsbeispiel bei dem auf diese Nachbildung verzichtet wird, jedoch eine nicht vernachlässigbare Schwungmasse $T_1$ des Prüflings zugelassen ist und für die Last ein nicht vernachlässigbares Last-Drehmoment $M_2'$ vorgegeben ist. Fig 7 zeigt schematisch ein bevorzugtes Ausführungsbeispiel, bei dem der Drehmomentaufnehmer das über die Welle zwischen Prüfling und Antrieb ausgetauschte "äußere Drehmoment $M_A$" erfaßt und zusätzlich auch die dynamische Nachbildung des Antriebes nach Fig. 5 vorgesehen ist.

Ausgangspunkt der Überlegungen ist die Forderung daß bei einer Prüfung, bei der der Prüfling unter den simulierenden Bedingungen das gleiche innere Drehmoment aufbringt wie unter den simulierten Bedingungen die zeitliche Änderung $\dot{n}$ der Drehzahl n gleich der entsprechenden Änderung $\dot{n}'$ der Drehzahl n' sein soll. Wegen $M_B = M_2 - M_1$ und $M_B' = M_2' - M_1$ gilt daher $\dot{n} = M_B/(T_1 + T_2) = \dot{n}' = M_B'/(T_1 + T_2')$. Daraus folgt $M_B = M_B' \cdot (T_1 + T_2)/(T_1 + T_2')$. Für das vom elektrischen Antrieb aufzubringende Moment $M_2$ gilt demnach: $M_2 = M_2' + M_B \cdot (T_2 - T_2')/(T_1 + T_2)$.

Dies führt zunächst zu der in Fig. 3 angegebenen bekannten Schaltung. Die Rückkopplung auf die unterlagerte Drehmomentregelung verändert die Dynamik der Regelung ungunstig. Zwar kann bei geringen dynamischen Anforderungen diese Rückwirkung z. B. durch eine Glättung weitgehend unwirksam gemacht werden bei hohen Anforderungen an die Dynamik aber tritt diese Rückwirkung in voller Stärke auf. Eine Gegenkopplung ($T_2' > T_2$) verringert dabei die Dämpfung bis zur Stabilitätsgrenze, eine Mitkopplung ($T_2' < T_2$) verlangsamt den Regelkreis. Im Grenzfall kann der Regelkreis sogar kippen.

Gemäß der Erfindung wird das Bremsmoment nicht aus der tatsächlichen, über die Differenzierung der Drehzahl abgeleiteten Beschleunigung der gemeinsamen Schwungmassen $T_1 + T_2$ gebildet.

Gemäß der einen in Fig. 5 dargestellten Lösung wird vielmehr über ein mit 51 bezeichnetes Dynamikglied aus den Sollwerten für die Ständereinspeisung (also letztlich dem Drehmomentsollwert $M_2^*$ des elektrischen Antriebs) ein Modell-Istwert $\hat{M}_2$ gebildet, dem analog zu $M_2 - M_1$ ein Modell-Beschleunigungsmoment $\hat{M}_B = \hat{M}_2 - M_1$ zugeordnet wird. Das Dynamikglied 51 bildet dabei die Dynamik des Stellgliedes für das vom elektrischen Antrieb aufzubringende elektrische Antriebsmoment des Antriebs nach die Subtraktionsstelle 52 bildet aus dem gemessenen Moment $M_1$ des Prüflings und dem Modell-Antriebsmoment $\hat{M}_2$ das Modell-Beschleunigungsmoment $\hat{M}_B$. Das Proportionalglied 53 entspricht dabei dem Multiplikationsglied 37 in Fig. 3. In beiden Fällen liefert ein Rechner 10 dem das Prüfprogramm eingespeichert ist die Werte $T_2'$ und $M_2'$, die für Trägheitsmoment und inneres Drehmoment der Last vorgegeben sind und für die Simulation benötigt werden.

Bei dieser Ausführungsform ist damit die Rückkopplung des tatsächlichen Momentes $M_2$ auf den entsprechenden Sollwert $M_2^*$ unterbunden. Es sind lediglich dem Sollwerteingang 54 des elektrischen Antriebs Rechenbausteine vorgeschaltet deren Rechenoperation gegebenenfalls vom Rechner 10 selbst ausgeführt werden können.

Dies führt somit zu einer Vorrichtung bei der wie bei Fig. 4 ein drehmomentengeregelter elektrischer Antrieb mit konstantem Trägheitsmoment eine mit veränderlichen Trägheitsmoment behaftete Last simuliert der Drehmomentaufnehmer mit dem Drehmomenterzeuger verbunden ist und ein Rechenglied vorhanden ist, dem das vom Drehmomentaufnehmer gemessene Drehmoment und das Trägheitsmoment der simulierten Last eingegeben ist, und das daraus einen dem Drehmomentsollwert für den elektrischen Antrieb entsprechenden Sollwert bildet. Im Unterschied zu Fig. 4 ist aber (insbesondere für einen mit einem nicht vernachlässigbaren eigenen Trägheitsmoment behafteten Drehmomenterzeuger) vorgesehen daß dem Rechenglied über das Dynamikglied 51 auch der Sollwert $M_2^*$ des Antriebs zugeführt ist. Das Rechenglied bestimmt dabei aus dem Drehmomentaufnehmer gemessenen Drehmoment $M_1$ und dem Sollwert $M_2^*$ des Antriebs ein dem Trägheitsmoment des Antriebs und des Drehmomenterzeugers gemeinsam zugeordnetes Modell-Beschleunigungsmoment $\hat{M}_B$, aus dem der Sollwert des Antriebs (gegebenenfalls nach Addition eines für die simulierte Last vorgegebenen Lastdrehmomentes $M_2'$) gebildet wird.

Man erhält eine schlechtere Dynamik der Simulation, aber gegenüber der Anordnung nach Fig. 3 immer noch ein günstigeres Regelkreisverhalten wenn man auf das Dynamikglied 51 verzichtet und den Sollwert $M_2^*$ direkt auf Subtraktionsstelle 52 aufschaltet. In diesem Fall ergibt sich:

$$M_2^* = M_2' + (M_2^* - M_1) \cdot (T_2 - T_2')/(T_1 + T_2)$$

oder, aufgelöst nach $M_2^*$:

$$M_2^* = M_2' (T_1 + T_2)/(T_1 + T_2') - M_1 (T_2 + T_2')/(T_1 + T_2')$$

was in Fig. 6 dargestellt ist. Der Vergleich mit Fig. 4 zeigt, daß sich die im Stand der Technik aus Energieüberlegungen für einen Spezialfall abgeleitete Schaltung gemäß diesen allgemeinen Überlegungen durch den Grenzfall $M_2' = 0$ (d. h. $M_B' = M_1$) und $T_1 = 0$ ergibt.

Die bisher besprochenen Anordnungen erfordern eine Messung von $M_1$, was in der Praxis, z. B. bei der Prüfung kompakterer Brennkraftmaschinen häufig praktisch nicht möglich ist. In diesen Fällen ist es vorteilhaft, nicht von $M_1$, sondern von dem äußeren Drehmoment $M_A$ auszugehen, also den Drehmomentaufnehmer so anzuordnen daß er zwischen dem vom Prüfung angetriebenen und dem vom Antrieb angetriebenen Ende der Welle 3 in Fig. 1 entsprechend der Ebene E($M_A$) angeordnet ist. Ein derartiger Aufbau des Prüfstandes ist in Fig 7 mit 70 dargestellt.

Demnach ist der Drehmomentaufnehmer 71 zwischen dem Prüfling 1 und dem elektrischen Antrieb 2 an der kraftschlüssigen Verbindung der Drehmomenterzeugerwelle 72 mit der Antriebswelle 73 angeordnet. Der Antrieb 2 ist wiederum mit einem Stellglied 13 für das von ihm aufzubringende elektrische Moment $M_2$ verbunden, wobei über entsprechende Meßglieder 8 der Istwert dieses elektrischen Momentes erfaßt und zusammen mit dem entsprechenden Sollwert $M_2^*$ der Regelvergleichsstelle 1 einem Drehmomentenregler 74 aufgeschaltet ist. Der Ausgang dieses Drehmomentenreglers 74 ist einem entsprechenden Steuersatz 75 für das Stellglied 13 aufgeschaltet. Mit 76 und 77 sind die Ausgänge für die Meßwerte des Drehmomentaufnehmers 71 sowie eines Drehzahlmessers 78 bezeichnet 79 und 80 stellen die Anschlüsse für die Sollwerteingabe und Istwertausgabe des Antriebsmomentes dar.

Diese Anordnung 70 läßt sich, wie im Zusammenhang mit Fig. 3 bereits beschrieben (Glieder 31, 32, 33, 34) regelungstechnisch darstellen. Zusätzlich ist in Fig. 7 durch die Proportionalglieder 76' und 76'' dargestellt, wie sich das an der Welle auftretende äußere Drehmoment $M_A$ aus dem tatsächlichen elektrischen Moment $M_2$ und dem vom Prüfling aufgebrachten Moment $M_1$ zusammensetzt. Es läßt sich nämlich zeigen, daß gilt:

$$M_A = M_1 \cdot T_2/(T_1 + T_2) + M_2 \cdot T_1/(T_1 + T_2) \text{ bzw.}$$
$$M_1 = M_A \cdot T_2/(T_1 + T_2) - M_2 \cdot T_1/T_2.$$

Der bereits für die unterlagerte Drehmomentenregelung verwendete Antriebsmoment-Istwert $M_2$ wird dabei zusätzlich auch für die Bildung des Antriebsmoment-Sollwerts $M_2^*$ abgegriffen um durch eine gewogene Subtraktion vom Meßwert $M_A$ einen Modellwert $\hat{M}_1$ für das tatsächliche innere Moment $M_1$ deb Prüflings zu erhalten. Dies ist durch die Proportionalitätsglieder 81 und 82 und die Subtraktionsstelle 83 dargestellt.

Das auf diese Weise erhaltene Modell-Prüflingsmoment $\hat{M}_1$ kann gemäß Fig. 6 anstelle des gemessenen Prüflingsmommntes $M_1$ über das Multiplikationsglied 40 dem Überlagerungsglied 39 zugeführt werden, um durch Überlagerung mit dem Lastmoment $M_2'$ den Antriebssollwert $M_2^*$ zu erhalten. Auch in diesem Fall ist die Rückkopplung unterbunden da der vom Antrieb kommende Anteil $M_2$ an der Bildung des Momentes $M_A$ durch Aufschaltung des Istwertes $M_2$ eliminiert ist. Während die Proportionalglieder 81, 82 nur die bekannten konstanten Schwungmassen $T_1$, $T_2$ berücksichtigen werden die Faktoren der nach Fig. 6 zu verwendenden Multiplizierglieder durch die im Rechner 40 gespeicherten Labt-Schwungmassen $T_2'$ bestimmt.

Diese Variante führt somit zu einer Vorrichtung, die sich vom Stand der Technik selbst im Grenzfall $M_2' = 0$, $T_1 = 0$ durch die Anordnung des Drehmomentaufnehmers unterscheidet. Ferner ist dabei vorgesehen, daß dem Rechenglied auch ein Meßwert für das im Antrieb elektrisch erzeugte Drehmoment zugeführt ist. Das Rechenglied ermittelt aus dem elektrisch erzeugten Drehmoment und dem vom Drehmomentaufnehmer gemessenen Drehmoment ein Modell-Drehmoment, aus dem der Sollwert des Antriebs gebildet wird. Ist für die simulierte Last ein Last-Drehmoment vorgegeben, so kann bei der Bildung des Sollwertes zusätzlich eine entsprechende Addition vorgenommen werden.

Wegen der eliminierten Rückkopplung ist es bei dieser Schaltung bereits möglich, den verwendeten unterlagerten Regelkreis ohne die erwähnten rückkopplungsbedingten Schwierigkeiten abzustimmen. Jedoch ist auch hier eine weitere Verbesserung der Dynamik möglich, in dem dem Rechenglied zur Ermittlung des Modell-Drehmomentes zusätzlich der Sollwert des Antriebs über ein die Dynamik des Drehmoment-Stellgliedes nachbildendes Dynamikglied aufgeschaltet wird, entsprechend Fig. 5. Daher ist auch in Fig. 7 der Drehmomentsollwert $M_2^*$ über das Dynamikglied 51 und die Überlagerungsstelle 52 auf den Modellwert $\hat{M}_1$ aufgeschaltet. Dadurch wird das Modell, Beschleunigungsmoment $\hat{M}_B$ gebildet, dem hinter dem Multiplizierglied 53 zur Bildung des Drehmomentsollwertes $M_2^*$ gegebenenfalls an der Additionsstelle 39 das vorgegebene Lastdrehmoment $M_2'$ zugeführt ist.

Ferner ist in Fig. 7 vorgesehen, bei der Bildung des Sollwertes $M_2^*$ zusätzlich dem Modell-Beschleunigungsmoment $\hat{M}_B$ eine Korrekturgröße aufzuschalten die von einem Korrekturregler gebildet ist. Dadurch wird das Modell-Beschleunigungsmoment dem tatsächlichen Beschleunigungsmoment nachgeführt. Der Sollwert für den Regler wird aus der gemessenen Drehzahl bzw. Drehbeschleunigung der Drehmomenterzeugerwelle abgeleitet. Dies kann mit einem Beschleunigungsgeber geschehen, wie er im Zusammenhang mit Fig. 3 erwähnt und durch einen Differenzierer 35 und ein Proportionalglied 36 symbolisiert ist. Am Ausgang des Überlagerungsgliedes 52 steht das entsprechende Modell-Beschleunigungsmoment $\hat{M}_B$ an, so daß die Regelabweichung $M_B - \hat{M}_B$ über einen Korrekturregler 89 der Additionsstelle 39, an der $M_2^*$ gebildet wird, zusätzlich aufgeschaltet werden kann.

Da zwischen $M_A$, $M_1$ und $M_2$ im Normalbetrieb der Zusammenhang

$$M_A' = M_1 \cdot T_2'/(T_1 + T_2') + M_2' \cdot T_1/(T_1 + T_2')$$
$$= M_2' - M_B' \cdot T_2'/(T_1 + T_2')$$

herrscht, kann wegen $M_B = M_B' (T_1 + T_2)/(T_1 + T_2')$ die gewünschte Nachführung dadurch erhalten werden, daß der Sollwert $M_A^* = M_2' - M_B \cdot T_2'/(T_1 + T_2)$ mit dem Istwert $M_A$ verglichen und zur Korrektur der Größe $M_2' + \hat{M}_B (T_2 - T_2')/(T_1 + T_2)$ der Additionsstelle 39 aufgeschaltet wird. Dies ist in Fig. 7 dargestellt, wo mittels des Multiplikationsgliedes 87 und der Subtraktionsstelle 88 $M_A^*$ gebildet und der Regelvergleichsstelle zusammen mit dem gemessenen der Bildung der Modell-Drehmomente $\hat{M}_1$ und $\hat{M}_B$ zugrundegelegten Wert $M_A$ verglichen wird.

Die Dynamik der gesamten Anordnung wird im wesentlichen durch die Steuerung des Antriebs mittels $M_2'$ und $\hat{M}_B$ bestimmt. Der Regler 89 bewirkt demgegenüber nur, daß $\hat{M}_B$ bzw. $M_A$ dem tatsächlichen Beschleunigungsmoment $M_B$ bzw. dem auf den Prüfling wirkenden nachzubildenden äußeren Drehmoment $M_A'$ im stationären Zustand gleich wird. Er braucht daher nicht auf hohe Dynamik dimensioniert zu werden vielmehr kann sein Eingriff schwach ausgelegt werden. Insbesondere kann die Drehzahl bereits vor der Differenzierung geglättet werden wie durch das Glättungsglied 90 angedeutet ist.

Da der Rechner nicht nur den Antrieb, sondern z. B. bei der Prüfung einer Brennkraftmaschine auch diese Maschine steuert und zu diesem Zweck häufig bereits die nötige Information über die tatsächliche Drehzahl enthält, können die nötigen Regeloperationen ohne Verwendung weiterer Meßglieder vom Rechner direkt durchgeführt werden. Dabei kann es vorteilhaft sein ein auserhalb des Rechners angeordneteh, abstimmbares Dynamikglied 51 zu verwenden um dieses Glied auf das Verhalten des Antriebs bequem abstimmen zu können; es kann aber auch die Funktion des Dynamikgliedes noch zusammen mit den anderen Elementen in den Rechner verlagert werden.

**Patentansprüche**

1. Vorrichtung zum Prüfen eines Drehmomenterzeugers (1) dessen Welle (3) im Normalbetrieb an eine trägheitsmomentenbehaftete Last gekoppelt ist, mit

a) einem die Last simulierenden drehmomentgeregelten elektrischen Antrieb (2) mit bekanntem Trägheitsmoment ($T_2$)

b) einem mit dem Drehmomenterzeuger (1) verbundenen Drehmomentaufnehmer (6) und

c) einem Rechenglied, dem das vom Drehmomentaufnehmer gemessene Drehmoment ($M_1$) und das Trägheitsmoment ($T_2'$) der simulierten Last eingegeben ist und das daraus einen dem Drehmomentsollwert ($M_2^*$) für den elektrischen Antrieb (1) entsprechenden Sollwert bildet gekennzeichnet durch folgende weitere Merkmale:

d) dem Rechenglied (39, 52, 53) ist über ein die Dynamik des Stellgliedes für das Drehmoment des elektrischen Antriebes nachbildendes Dynamikglied (51) auch der Drehmomentsollwert ($M_2^*$) zugeführt und

e) das Rechenglied bestimmt aus dem vom Drehmomentaufnehmer gemessenen Drehmoment ($M_1$) und dem Drehmomentsollwert ($M_2^*$) ein den Trägheitsmomenten ($T_1 + T_2$) des Antriebes und des Drehmomenterzeugers gemeinsam zugeordnetes Modell-Beschleunigungsmoment ($\hat{M}_B$), aus dem der Drehmomentsollwert ($M_2^*$) gegebenenfalls nach Addition eines für die simulierte Last vorgegebenen Lastdrehmomentes ($M_2'$) gebildet wird (Fig. 1, 5).

2. Vorrichtung zum Prüfen eines Drehmomenterzeugers (1) dessen Welle im Normalbetrieb an eine trägheitsmomentenbehaftete Last gekoppelt ist mit

a) einem die Last simulierenden drehmomentgeregelten elektrischen Antrieb (2) mit konstantem Trägheits-Moment ($T_2$)

b) einem mit dem Drehmomenterzeuger (1) verbundenen Drehmomentaufnehmer (71), und

c) einem Rechenglied, dem das vom Drehmomentaufnehmer gemessene Drahmoment ($M_A$) und das Trägheitsmoment ($T_2'$) der simulierten Last eingegeben ist und das daraus einen dem Drehmomentsollwert ($M_2^*$) für den elektrischen Antrieb entsprechenden Sollwert bildet

gekennzeichnet durch folgende weitere Merkmale:

d) der Drehmomentaufnehmer (71) ist an der kraftschlüssigen Verbindung zwischen den Wellen des Drehmomenterzeugers (1) und des Antriebs (2) angeordnet.

e) dem Rechenglied ist auch ein Meßwert ($M_2$) für das im Antrieb elektrisch erzeugte Drehmoment zugeführt und

f) das Rechenglied (39, 52, 53, 81, 82, 83) ermittelt aus dem elektrisch erzeugten Drehmoment ($M_2$) und dem vom

Drehmomentaufnehmer gemessenen Drehmoment ($M_A$) ein den Trägheitsmomenten ($T_1 + T_2$) von Antrieb und Drehmomenterzeuger gemeinsam zugeordnetes Modell-Drehmoment ($\hat{M}_1$) aus dem der Drehmomentsollwert des Antriebs gegebenenfalls nach Addition (Additionsstelle 39) eines für die simulierte Last vorgegebenen Last-Drehmomentes ($M_2'$) gebildet wird (Fig.7).

3. Vorrichtung nach Anspruch 2, <u>gekennzeichnet</u> durch ein Subtraktionsglied (83) für das gemessene und daß elektrisch erzeugte Drehmoment, zur Bildung des dem inneren Drehmoment des Drehmomenterzeugers zugeordneten Modell-Drehmomentes ($\hat{M}_1$).

4. Vorrichtung nach Anspruch 2 oder 3 <u>dadurch gekennzeichnet</u> daß dem Rechenglied zusätzlich der Sollwert ($M_2$) des Antriebs über ein die Dynamik des Stellgliedes für das vom elektrischen Antrieb aufzubringende elektrische Drehmoment nachbildendes Dynamikglied (51) zugeführt ist (Fig. 7).

5. Vorrichtung nach Anspruch 3 und 4, <u>gekennzeichner</u> durch ein zweites Subtraktionsglied (52) für das nachgebildete Drehmoment ($\hat{M}_2$) des Antriebs und das Modell-Drehmoment ($\hat{M}_1$) des Drehmomenterzeugers zur Bildung eines der Winkelbeschleunigung der kraftschlüssig verbundenen Wallen zugeordneten Modell-Beschleunigungsmomentes ($\hat{M}_B$).

6. Vorrichtung nach einem der Ansprüche 2 bis 5, <u>dadurch gekennzeichnet</u>, daß Mittel (35, 36) zur Erfassung der Winkelbeschleunigung der Drehmomenterzeugerwelle und ein nachgeschalteter Korrekturregler (89) zur Korrektur des Modell-Drehmomentes vorgesehen sind, und daß bei der Bildung des Drehmomentsollwerts ($M_2^*$) des Antriebs dem Modell-Drehmoment ($\hat{M}_B$) zusätzlich die Reglerausgangsgröße aufgeschaltet ist (Additionsglied 39).

7. Vorrichtung nach Anspruch 6, <u>dadurch gekennzeichnet</u>, daß die erfaßte Winkelbeschleunigung ($\dot{n}$) zusammen mit dem gegebenenfalls für die simulierte Last vorgegebenen Last-Drehmoment ($M_2'$) und dem Drehmomentaufnehmer gemessenen Drehmoment ($M_A$) dem Regler (89) zugeführt ist (Fig. 7).

8. Vorrichtung nach Anspruch 6 oder 7, <u>dadurch gekennzeichnet</u>, daß die Mittel zur Erfassung der Winkelbeschleunigung einen Differenzierer für die Drehzahl der Drehmomenterzeugerwelle enthalten und daß diese Mittel und der Korrekturregler so ausgebildet sind daß das vom Drehmomentaufnehmer gemessene Drehmoment ($M_A$) einem geglätteten, an der erfaßten Winkelbeschleunigung abgeleiteten Moment ($M_A^*$) nachgeführt wird.

9. Vorrichtung zum Prüfen eines Drehmomenterzeugers (1), dessen Welle (3) im Normalbetrieb an eine trägheitsmomentenbehaftete Last gekoppelt ist, mit

a) einem die Last simulierenden drehmomentgeregelten elektrischen Antrieb (2) mit bekanntem Trägheitsmoment $T_2$,

b) einem mit dem Drehmomenterzeuger (1) verbundenen Drehmomentaufnehmer (6) und

c) einem Rechenglied, dem das mittels des Drehmomentaufnehmers (1) bestimmte Drehmoment ($M_1$) und das Trägheitsmoment $T_2'$ der simulierten Last eingegeben ist und das daraus einen dem Drehmomentsollwert $M_2^*$ für den elektrischen Antrieb (1) entsprechenden Sollwert bildet,

<u>gekennzeichnet durch</u> eine derartige Ausbildung des Rechengliedes, daß es den Drehmomentsollwert $M_2^*$ entsprechend der Bestimmungsgleichung

$$M_2^* = M_2' + (\hat{M}_2 - M_1) \cdot (T_2 - T_2')/(T_1 + T_2)$$

bildet, wobei mit $M_2'$ ein für die simulierte Last vorgegebenes Lastdrehmoment und mit $T_1$ das Trägheitsmoment des Drehmomenterzeugers und mit $\hat{M}_2$ ein Modell-Istwert für das simulierende Antriebsmoment bezeichnet ist, der durch den Drehmomentsollwert $M_2^*$ oder durch Nachbildung der Dynamik des elektrischen Antriebs bestimmt ist, und wobei ferner für $M_2'$ und $T_1$ nicht gleichzeitig der Wert Null vorgegeben wird (Fig. 6)

**Claims**

1. A testing device for a torque generator (1), whose shaft (3) is coupled to a load affected by a moment of inertia during normal operation, comprising:

a) an electrical drive (2) regulated by the torque to simulate the load with a known moment of inertia ($T_2$);

b) a torque pickup (6) connected to the torque generator (1); and

c) a calculating element fed by the torque ($M_1$) measured by the torque pickup, and the moment of inertia ($T_2'$) of the simulated load, and which forms therefrom a theoretical value corresponding to the theoretical value ($M_2^*$) of the torque for the electrical drive (1);

<u>characterised by</u> the following features:

d) the calculating element (39, 52, 53) is supplied with the theoretical value ($M_2^*$) of the torque by a dynamic element (51) which simulates the dynamic range of the adjusting element for the torque; and

e) from the torque ($M_1$) measured by the torque pickup and the theoretical value of the torque ($M_2^*$) the calculating element determines a model acceleration moment ($\hat{M}_B$) commonly assigned to the moments of inertia ($T_1 + T_2$) of the drive and the torque generator, from which model acceleration moment the theoretical value of the torque ($M_2^*$) is formed, if necessary, following the addition of a load torque ($M_2'$) predetermined for the simulated load (Fig. 1, 5).

2. A testing device for a torque generator (1), whose shaft is coupled to a load affected by a moment of inertia during normal operation, comprising:

a) a torque-regulated electrical drive (2) which simulates the load and has a constant moment of inertia ($T_2$);

b) a torque pickup (71) connected to the torque generator (1);

and

c) a calculating element fed by the torque ($M_A$) measured by the torque pickup and the moment of inertia ($T_2'$) of the simulated load, and which forms therefrom a theoretical value corresponding to the theoretical value of the torque ($M_2^*$) for the electrical drive;

characterised by the following features:

d) the torque pickup (71) is connected on the force-locking connection between the shafts of the torque generator (1) and the drive (2);

e) a measured value ($M_2$) for the torque electrically produced in the drive is fed to the calculating element; and

f) from the electrically-generated torque ($M_2$) and the torque ($M_A$), measured by the torque pickup, the calculating element (39, 52, 53, 81, 82, 83) determines a model torque ($\hat{M}_1$) commonly assigned to the moments of inertia ($T_1 + T_2$) of drive and torque generator ($M_1$), from which model torque the theoretical value of the torque of the drive is formed, if necessary after the addition (addition point 39) of a load torque ($M_2'$) predetermined for the simulated load (Fig. 7).

3. A device as claimed in Claim 2, characterised by a subtraction element (83) for the measured and the electrically-produced torque to form the model torque ($\hat{M}_1$) assigned to the inner torque of the torque generator.

4. A device as claimed in Claim 2 or 3, characterised in that the calculating element is additionally supplied with the theoretical value ($M_2$) of the drive by a dynamic element (51) which simulates the dynamic range of the adjusting element for the torque supplied by the electric drive (Fig. 7).

5. A device as claimed in Claim 3 and 4, characterised by a second subtraction element (52) for the simulated torque ($\hat{M}_2$) of the drive and the model torque ($\hat{M}_1$) of the torque generator, to form a model acceleration moment ($\hat{M}_B$) assigned to the angular acceleration of the shafts connected in a form-locking fashion.

6. A device as claimed in one of Claims 2 to 5, characterised in that means (35, 36) are arranged for detecting the angular acceleration of the torque generator shaft and a following correction regulator (89) for the correction of the model torque, and that during the formation of the theoretical value of the torque ($M_2^*$) of the drive the model torque ($\hat{M}_B$) is additionally added to the regulator output magnitude (additional element 39).

7. A device as claimed in Claim 6, characterised in that the detected angular acceleration ($\dot{n}$), if necessary together with the load torque ($M_2'$) predetermined for the simulated load, and with the torque ($M_A$) measured by the torque pickup, is supplied to the regulator (89) (Fig. 7).

8. A device as claimed in Claim 6 or 7, characterised in that the means for the detection of the angular acceleration comprise a differentiator for the number of revolutions of the torque generator shaft, and that said means and the correction regulator are such that the torque ($M_A$) measured by the torque pickup follows a smoothed torque ($M_A^*$) derived at the detected angular acceleration.

9. A testing device for a torque generator (1) whose shaft (3) is coupled to a load affected by the moment of inertia during normal operation, comprising:

a) an electrical drive (2) regulated by the torque to simulate the load with a known moment of inertia $T_2$;

b) a torque pickup (6) connected to the torque generator (1);

and

c) a calculating element fed by the torque ($M_1$) determined by the torque pickup (1) and the moment of inertia $T_2'$ of the simulated load, and which forms therefrom a theoretical value corresponding to the theoretical value of the torque $M_2^*$ for the electrical drive (1);

characterised by a design of the calculating element contrived such that it forms the theoretical value of the torque $M_2^*$ in accordance with the equation

$$M_2^* = M_2' + (\hat{M}_2 - M_1) \cdot (T_2 - T_2')/(T_1 + T_2);$$

where $M_2'$ represents a load torque predetermined for the simulated load;

$T_1$ represents the moment of inertia of the torque generator;

and

$\hat{M}_2$ represents an actual model value for the simulating drive moment determined by the theoretical value of the torque $M_2^*$ or by simulation of the dynamic range of the electrical drive;,

and furthermore, where the value zero is not simultaneously given for $M_2'$ and $T_1$ (Fig. 6).

## Revendications

1. Dispositif pour contrôler un générateur de couple (1), dont l'arbre (3) est accouplé, en fonctionnement normal, à une charge affectée d'un moment d'inertie, comportant

a) un dispositif d'entraînement électrique (2), dont le couple est réglé et qui simule la charge et possède un moment d'inertie ($T_2$) connu,

b) un capteur de couple (6) relié au générateur de couple (1), et

c) un circuit de calcul, dans lequel le couple ($M_1$) mesuré par le capteur de couple et le moment d'inertie ($T_2'$) de la charge simulée sont introduits et qui forme, à partir de là, une valeur de consigne correspondant à la valeur de consigne ($M_2^*$) du couple pour le dispositif d'entraînement électrique (1),

remarquable par les caractéristiques supplémentaires suivantes:

d) la valeur de consigne ($M_2^*$) du couple est également envoyée au circuit de calcul (39, 52, 53) par l'intermédiaire d'un circuit de dynamique (51) simulant la dynamique du circuit de réglage du couple du dispositif d'entraînement électrique, et

e) le circuit de calcul détermine à partir du couple ($M_1$) mesuré par le capteur de couple et de la valeur de consigne ($M_2^*$) du couple, un moment d'accélération modèle ($\hat{M}_B$) associé en commun aux moments d'inertie ($T_1 + T_2$) du dispositif d'entraînement et du générateur de couple et à partir duquel la valeur de consigne ($M_2^*$) du couple est formée, éventuellement après addition d'un couple de charge ($M_2'$) prédéterminé pour la charge simulée (figures 1, 5).

2. Dispositif pour contrôler un générateur de couple (1), dont l'arbre (3) est accouplé, en fonctionnement normal, à une charge affectée d'un moment d'inertie, comportant

a) un dispositif d'entraînement électrique (2), dont le couple est réglé et qui simule la charge et possède un moment d'inertie ($T_2$) connu,

b) un capteur de couple (71) relié au générateur de couple (1), et

c) un circuit de calcul, dans lequel le couple ($M_1$) mesuré par le capteur de couple et le moment d'inertie ($T_2'$) de la charge simulée sont introduits et qui forme, à partir de là, une valeur de consigne correspondant à la valeur de consigne ($M_2^*$) du couple pour le dispositif d'entraînement électrique,

remarquable par les caractéristiques supplémentaires suivantes:

d) le capteur de couple (71) est disposé dans la liaison de force entre l'arbre du générateur de couple (1) et le dispositif d'entraînement (2),

e) une valeur de mesure ($M_2$) pour le couple produit électriquement dans le dispositif d'entraînement est également envoyé au circuit de calcul, et

f) le circuit de calcul (39, 52, 53, 81, 82, 83) détermine à partir du couple ($M_2$) produit électriquement et du couple ($M_A$) mesuré par le capteur de couple, un couple modèle ($\hat{M}_1$) associé en commun aux moments d'inertie ($T_1 + T_2$) du dispositif d'entraînement et du générateur de couple et à partir duquel la valeur de consigne du couple du dispositif d'entraînement est formée éventuellement après addition (noeud d'addition 39) d'un couple de charge ($M_2'$) prédéterminé pour la charge simulée (figure 7).

3. Dispositif suivant la revendication 2, caractérisé par un circuit soustracteur (83) pour le couple mesuré et le couple produit électriquement pour la formation du couple modèle ($M_1$) associé au couple interne du générateur de couple.

4. Dispositif suivant la revendication 2 ou 3, caractérisé par le fait qu'en outre la valeur de consigne ($M_2$) du dispositif d'entraînement est envoyée au circuit de calcul par l'intermédiaire d'un circuit de dynamique (51) simulant la dynamique du circuit de réglage du couple électrique devant être appliqué par le dispositif d'entraînement électrique (figure 7).

5. Dispositif suivant les revendications 3 et 4, caractérisé par un second circuit soustracteur (52) pour le couple simulé ($\hat{M}_2$) du dispositif d'entraînement et le couple modèle ($\hat{M}_1$) du générateur de couple pour la formation d'un moment d'accélération modèle ($\hat{M}_B$) associé à l'accélération angulaire de l'arbre relié selon une liaison de force.

6. Dispositif suivant l'une des revendications 2 à 5, caractérisé par le fait qu'il est prévu des moyens (35, 36) pour détecter l'accélération angulaire de l'arbre du générateur de couple et un régulateur de correction (89) branché en aval et servant à corriger le couple modèle, et que, lors de la formation de la valeur de consigne ($M_2^*$) du couple du dispositif d'entraînement, la grandeur de sortie du régulateur est ajoutée en supplément au couple modèle ($\hat{M}_B$) (circuit additionneur 39).

7. Dispositif suivant la revendication 6, caractérisé par le fait que l'accélération angulaire détectée ($\dot{n}$) est envoyée au régulateur (89) de même que le couple de charge ($M_2'$) prédéterminé éventuellement pour la charge simulée et le couple ($M_A$) mesuré dans le capteur de couple (figure 7).

8. Dispositif suivant la revendication 6 ou 7, caractérisé par le fait que les moyens servant à détecter l'accélération angulaire contiennent un circuit différentiateur pour la vitesse de rotation de l'arbre du générateur de couple et que ces moyens et le régulateur de correction sont agencés de telle sorte que le couple ($M_A$) mesuré par le capteur de couple est asservi à un couple lissé ($M_A^*$), dérivé de l'accélération angulaire détectée.

9. Dispositif pour contrôler un générateur de couple (1), dont l'arbre (3) est accouplé, en fonctionnement normal, à une charge affectée d'un moment d'inertie, comportant

a) un dispositif d'entraînement électrique (2), dont le couple est réglé et qui simule la charge et possède un moment d'inertie ($T_2$) connu,

b) un capteur de couple (6) relié au générateur de couple (1), et

c) un circuit de calcul, dans lequel le coule ($M_1$) mesuré par le capteur de couple et le moment d'inertie ($T_2'$) de la charge simulée sont introduits et qui forme, à partir de là, une valeur de consigne correspondant à la valeur de consigne ($M_2^*$) du couple pour le dispositif d'entraînement électrique (1),

remarquable par une réalisation telle du circuit de calcul que ce dernier forme la valeur de consigne ($M_2^*$) conformément à l'équation de définition

$$M_2^* = M_2' + (\hat{M}_2 - M_1) \cdot (T_2 - T_2')/(T_1 + T_2)$$

dans laquelle $M_2'$ est un couple de charge prédéterminé pour la charge simulée, $T_1$ le moment d'inertie du générateur de couple et $M_2^*$

une valeur réelle modèle pour le couple simulé, qui est déterminé par la valeur de consigne $M_2^*$ du couple ou par simulation de la dynamique du dispositif d'entraînement électrique, et dans laquelle en outre la valeur nulle n'est pas prédéterminée simultanément pour $M_2'$ et $T_1$ (figure 6).

$$M_B = (T_1 + T_2) \cdot \frac{dn}{dt}$$

FIG 1   (Stand der Technik)

(Antrieb)
$M_2$

$$n = \frac{1}{T_1 + T_2} \int M_B \, dt$$

(Simulierte Last)
$M'_2$

$$n' = \frac{1}{T_1 + T'_2} \int M_B \, dt$$

FIG 2

FIG 3   (Stand der Technik)

FIG 4   (Stand der Technik)

FIG 5

FIG 6

FIG 7